# EUROPEAN PATENT SPECIFICATION

(11) **EP 0 604 007 B1**
(45) Date of publication and mention of the grant of the patent: **28.08.1996**
(21) Application number: 93308650.6
(22) Date of filing: 29.10.1993
(51) Int. Cl.: B60J 10/08, B60J 10/00, F16B 5/12

(54) **Improvements in and relating to sealing, trimming and finishing strips**
Verbesserungen an und in Beziehung zu Dichtung-, Verzierungs- oder Appretierungsstreifen
Améliorations aux et en rapport avec joints d'étanchéité, de garniture et d'apprêtage

(30) Priority: 23.12.1992 GB 9226849
(43) Date of publication of application: 29.06.1994
(73) Proprietor: DRAFTEX INDUSTRIES LIMITED, Edinburgh EH3 6YY, Scotland (GB)
(72) Inventor: Sans, Philippe, F-28110 Luce (FR)
(74) Representative: Foster, David Martyn

(56) References cited:
- FR-A- 1 182 883
- GB-A- 2 172 924
- GB-A- 2 184 767
- US-A- 2 974 079

## Description

The invention relates to improvements in and relating to sealing, trimming and finishing strips and more particularly to such strips in channel form.

Various forms of channel-shape sealing, trimming and finishing strips are known for embracingly gripping flange edges in and around closable openings such as closable openings on motor vehicle bodies - door or luggage compartment openings, for example. Such a strip may be provided as a length having two ends. It is fitted on to the flange around a particular opening so as to extend around the complete opening and so that the two ends abut against each other. In order to provide a neat appearance and effective sealing, trimming or finishing, it is desirable that the two ends be connected together.

According to the invention, there is provided a connector for connecting together two ends of channel-shaped sealing, trimming or finishing strip, comprising stiff material defining a channel which is sized to embracingly grip the region of one side wall of the strip adjacent one said end and the corresponding region of the corresponding side wall of the other end of the strip, whereby to hold the two ends together.

According to the invention, there is further provided channel-shaped sealing, trimming or finishing strip, two ends of which are connected in abutting relationship by means of a connector of U-shape in cross-section which connects one of the side walls of the channel of the strip adjacent one said end with the corresponding side wall of the channel of the strip adjacent the other end, the connector being made of relatively stiff resilient material and its U-shape being sized so as embracingly to grip the two side walls which it connects.

Further developments in line with the independent claims 1 and 4 directed to a connector and a strip, respectively, are referred to in the dependent claims 2, 3 and 5 to 9.

Sealing, trimming and finishing strips embodying the invention will now be described, by way of example only, with reference to the accompanying diagrammatic drawings in which:
Figure 1 is a side view of a motor vehicle body showing a door opening to which one of the sealing, trimming and finishing strips is to be fitted;
Figure 2 is an enlarged side view of part of the frame of the door opening of Figure 1 but viewed from inside the vehicle;
Figure 3 is a section on the line III-III of Figure 2;
Figure 4 is a section on the line IV-IV of Figure 2; and
Figure 5 corresponds to Figure 4 but shows a modified design.

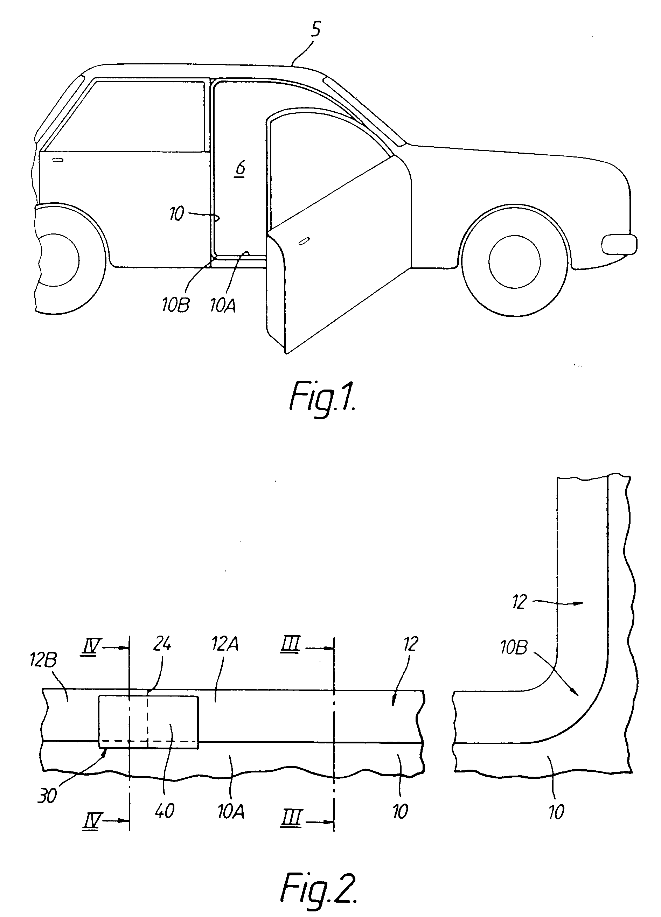

As shown in Figure 1, a motor vehicle body 5 has a door opening 6. The door opening is defined by a flange 10 which surrounds the opening and is formed where the inner and outer door body panels are brought together at the door opening and welded.

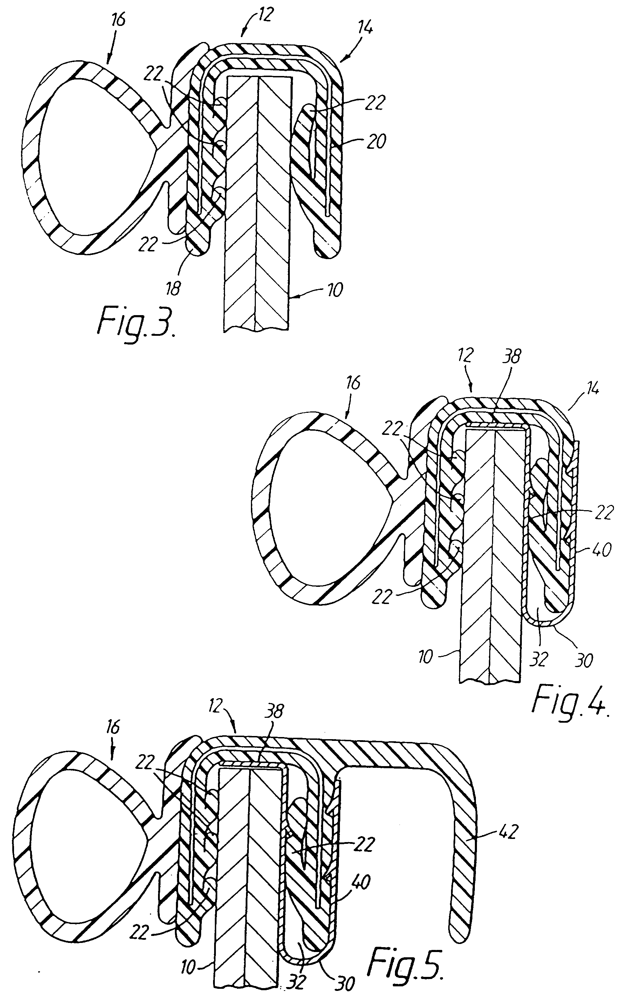

For sealing, trimming and finishing the flange 10, a sealing trimming and finishing strip of the form shown in Figure 3 is provided (the strip 12 is not visible in Figure 1). As shown in Figure 3, the strip 12 comprises a channel-shaped gripping portion 14 and a tubular sealing portion 16. The gripping portion is made of extruded plastics or rubber material 18 having an embedded core or carrier 20. The carrier 20 may be made of metal, for example. It is incorporated within the extruded material 18 by a cross-head extrusion process. The carrier 20 may take any suitable form. It may be made of channel-shaped metal, unapertured or perhaps provided with slits or slots along its length. Instead, it may be made of U-shaped elements arranged side-by-side to define the channel and connected together by short integral connecting links or disconnected from each other. Instead, it can be made of looped wire. However, many other forms of carrier are possible.

The extruded material 18 is extruded so as to produce integral inwardly extending lips 22. As shown, there are three relatively small lips 22 on one inside wall of the channel and are larger lip on the other side. However, the sizes and numbers of the lips may vary.

Advantageously, the lips are made of extruded material which is softer than the channel-shaped extruded material 18.

The sealing part 16 is preferably made of soft extruded cellular or "foamed" rubber. It may be extruded separately from the gripping part 14 and adhesively secured to it in a separate operation (as shown in Figure 3). Instead, it may be extruded simultaneously and integrally with the extruded material 18.

In use, and as shown in Figure 3, the gripping part 14 is placed embracingly over the flange 10 so as to grip the flange firmly. This gripping process is assisted by the resilience of the metal carrier 20 and also by the lips 22. In this way, the gripping part 14 supports the sealing part 16 so as to run around the outside of the door opening, the strip being placed on the flange so that the sealing part 16 is on the outside of the flange 10 and faces the direction in which the closing door approaches. The closing door thus partially compresses the sealing part 16, to provide a weather-tight seal.

Figure 2 shows, to an enlarged scale, part of the door frame 10A (Figure 1) running along the bottom of the door from the corner 10B, but viewed from the inside of the vehicle and with the strip 12 in position. The strip 12 is fitted onto the flange 10 so that its two end portions 12A and 12B abut as shown at 24. In order to complete the fitting process, it is desirable to secure these two end portions together. This helps to ensure that the strip remains firmly on the flange. It also helps to ensure that an unsightly gap is not created between the two abutting ends, if shrinkage of the strip should take place at a later date.

Figure 2 and 4 show a connector 30 for connecting the two abutting ends of the strip together. The connector 30 can be made of metal or plastics or other suitable material. Advantageously, it is relatively stiff. As shown, it is of one-piece construction defining a narrow channel 32 which, in use, tightly fits over one channel wall of the gripping part 14 where the two ends of the strip abut. As shown in Figure 2, the connector 30 extends for a short distance either side of the plane 24 in which the two abutting end faces of the strip meet. The connector 30 is advantageously provided with several inwardly directed prongs or teeth 36 which bite into the extruded material 18 of the meeting ends of the flange. The lips 22 on the region of the side wall of the gripping part 14 on which the connector 30 is fitted may be cut off locally. Instead, they can simply be compressed within the channel 32 as shown in Figure 4.

The inside wall of the connector 30 may have an integral extension 38 which extends over the inside base of the channel of the gripping part 14 so as to help to locate the connector, though this extension may be omitted.

The outside face of the connector 30 (that is, the face 40 visible in Figure 4) may be coloured to match the adjacent face of the gripping part 14. Instead, it may be of bright metal for example or otherwise decorated.

Figure 5 shows a modification in which the extruded material 18 is extended to form a so-called "cosmetic lip" 42. This can be used to cover over the edge of the fabric on the inside of the vehicle body, around the opening. In addition, however, the cosmetic lip 42 will wholly or partially cover the outside face 40 of the connector 30.

The connector 30 may be placed in position after the length of sealing strip 12 has been placed on the flange 10, so as to secure the two abutting ends together in the manner described. Instead, however, the two ends of the strip 12 may be secured together before the strip is placed on the flange, so as to produce a closed loop of strip which is thereafter placed on the flange.

The connector 30 considerably simplifies the assembly process. In particular, it enables the two ends of a length of strip to be firmly secured together without any fusion process such as using adhesive, heating or vulcanisation.

The two ends of strip which are connected together by the connector need not be the two ends of the same length of strip; they can be abutting ends of two different lengths of strip.

## Claims

1. A connector for connecting together two ends of channel-shaped sealing, trimming or finishing strip (12), characterised by stiff material (30) defining a channel (32) which is sized to embracingly grip the region of one side wall of the strip (12) adjacent one said strip end and the corresponding region of the corresponding side wall of the other strip end (12), whereby to hold the two ends together.

2. A connector according to claim 1, characterised in that the said stiff material (30) extends substantially at right angles from one edge of the mouth of its channel (32) so that, in use, this extension (38) lies in the base of the channel of the strip (12) where the two strip ends are connected.

3. A connector according to claim 1 or 2, characterised in that the stiff material (30) defines one or more formations (36) extending inwardly of its channel (32), whereby to engage the said side walls.

4. A channel-shaped sealing, trimming or finishing strip, characterised in that two ends of it are connected in abutting relationship by means of a connector (30) of U-shape in cross-section which connects one of the side walls of the channel of the strip (12) adjacent one said end with the corresponding side wall of the channel of the strip (12) adjacent the other end, the connector (30) being made of relatively stiff resilient material and its U-shape (32) being sized so as embracingly to grip the two side walls which it connects.

5. A strip according to claim 4, characterised in that the material of the connector is extended from one edge of the mouth of the U, the extension (38) extending at right angles to the legs of the U and lying in the base of the channel of the strip.

6. A strip according to claim 4 or 5, characterised in that the connector (30) defines prongs or teeth (36) extending inwardly of the U-shape cross-section so as to engage the material of the connected side walls.

7. A strip according to any one of claims 4 to 6, characterised in that it comprises channel-shaped flexible plastics or rubber material.

8. A strip according to claim 7, characterised by a reinforcing metal carrier (20) embedded in the plastics or rubber material.

9. A strip according to claim 7 or 8, characterised in that the plastics or rubber material defines one or more integral lips (22) extending inwardly of the channel of the strip.

## Patentansprüche

1. Verbindungsstück, um zwei Enden einer kanalförmigen Dichtungs-, Verzierungs- oder Appretierungsleiste (12) miteinander zu verbinden,
**gekennzeichnet durch**
ein steifes, einen Kanal (32) umgrenzendes Material (30), das so bemessen ist, daß dieses den an das eine Leistenende angrenzenden Bereich einer Seitenwand der Leiste (12) sowie den entsprechenden Bereich der entsprechenden Seitenwand des anderen Leistenendes (12) umgreifend festklemmt, um die zwei Enden zusammenzuhalten.

2. Verbindungsstück nach Anspruch 1, dadurch gekennzeichnet, daß sich das steife Material (30) so im wesentlichen rechtwinklig von einer Öffnung des Kanals (32) aus erstreckt, daß diese Verlängerung (38) im Betrieb in der Basis des Kanals der Leiste (12) liegt, wo die zwei Leistenenden miteinander verbunden sind.

3. Verbindungsstück nach Anspruch 1 oder 2, dadurch gekennzeichnet, daß das steife Material (30) eine oder mehrere sich nach innen in den Kanal (32) erstreckende Ausbildungen (36) umfaßt, um mit den Seitenwänden in Eingriff zu stehen.

4. Kanalförmige Dichtungs-, Verzierungs- oder Appretierungsleiste,
**dadurch gekennzeichnet**,
daß dessen beiden Enden mittels eines im Querschnitt U-förmigen Verbindungsstückes (30) aneinanderliegend verbunden sind, wobei das Verbindungsstück (30) angrenzend an ein Ende eine der Seitenwände des Kanals der Leiste (12) mit der entsprechenden, an das andere Ende angrenzenden Seitenwand des Kanals der Leiste (12) verbindet, das Verbindungsstück (30) aus einem relativ federsteifen Material hergestellt ist und dessen U-Form (32) bemessen ist, um die zwei Seitenwände, die es verbindet, umgreifend festzuklemmen.

5. Leiste nach Anspruch 4, dadurch gekennzeichnet, daß das Material des Verbindungsstückes von einer Kante der Öffnung des U aus verlängert ist, sich die Verlängerung (38) rechtwinklig zu den Schenkein des U erstreckt und in der Basis des Kanals der Leiste liegt.

6. Leiste nach Anspruch 4 oder 5, dadurch gekennzeichnet, daß das Verbindungsstück (30) Stacheln oder Zähne (36) umfaßt, die sich in das Innere des U-förmigen Querschnitts erstrecken, um in das Material der verbundenen Seitenwände einzugreifen.

7. Leiste nach einem der Ansprüche 4 bis 6, dadurch gekennzeichnet, daß diese ein kanalförmiges flexibles Kunststoff- oder Gummimaterial beinhaltet.

8. Leiste nach Anspruch 7, gekennzeichnet durch einen in das Kunststoff- oder Gummimaterial eingebetteten versteifenden Metallträger (20).

9. Leiste nach Anspruch 7 oder 8, dadurch gekennzeichnet, daß das Kunststoff- oder Gummimaterial eine oder mehrere einstückig ausgebildete Lippen (22) umfaßt, die sich in das innere des Kanals der Leiste erstrecken.

## Revendications

1. Raccord destiné à raccorder l'une à l'autre deux extrémités d'une moulure (12) d'étanchéité, de garniture ou de finition en forme de profilé en U, caractérisé par une matière rigide (30) définissant une gorge (32) qui est dimensionnée pour enserrer en les emboîtant la région d'une paroi latérale de la moulure (12) qui est adjacente à une desdites extrémités de la moulure et la région correspondante de la paroi latérale de l'autre extrémité (12) de la moulure, de manière à maintenir les deux extrémités assemblées.

2. Raccord selon la revendication 1, caractérisé en ce que ladite matière rigide (30) s'étend sensiblement à angle droit à partir d'un bord de la bouche de sa gorge (32), de sorte que, en utilisation, ce prolongement (38) se trouve dans la base de la gorge de la moulure (12) à l'endroit où les deux extrémités de la moulure sont assemblées.

3. Raccord selon la revendication 1 ou 2, caractérisé en ce que la matière rigide (30) définit une ou plusieurs formations (36) s'étendant vers l'intérieur de sa gorge (32), de manière à attaquer lesdites parois latérales.

4. Moulure d'étanchéité, de garniture ou de finition en forme de profilé en U, caractérisée en ce que deux extrémités de cette moulure sont assemblées dans des positions en butée l'une contre l'autre au moyen d'un raccord (30) en forme de U en section transversale, qui assemble l'une des parois latérales du profilé en U de la moulure (12), dans la région adjacente à une desdites extrémités, à la paroi latérale correspondante du profilé en U de la moulure (12) dans la région adjacente à l'autre extrémité, le raccord (30) étant fait d'une matière élastique relativement rigide et sa forme de U (32) étant de dimension appropriée pour enserrer en les emboîtant les deux parois latérales qu'elle assemble en les emboîtant.

5. Moulure selon la revendication 4, caractérisée en ce que la matière du raccord se prolonge à partir d'un bord de la bouche du U, le prolongement (38) s'étendant à angle droit par rapport aux branches du U et se trouvant dans le fond de la gorge de la moulure.

6. Moulure selon la revendication 4 ou 5, caractérisée en ce que le raccord (30) définit des griffes ou dents (36) s'étendant vers l'intérieur de la section en forme de U pour attaquer la matière des parois latérales assemblées.

7. Moulure selon une des revendications 4 à 6, caractérisée en ce qu'elle comprend une matière plastique ou caoutchouteuse flexible, en forme de profilé en U.

8. Moulure selon la revendication 7, caractérisée par une armature métallique de renforcement (20) noyée dans la matière plastique ou caoutchouteuse.

9. Moulure selon la revendication 7 ou 8, caractérisée en ce que la matière plastique ou caoutchouteuse définit une ou plusieurs lèvres (22) venues de matière, qui s'étendent à l'intérieur de la gorge de la moulure.
